(19) **Europäisches Patentamt / European Patent Office / Office européen des brevets**

(11) **EP 1 511 625 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**14.03.2012 Patentblatt 2012/11**

(45) Hinweis auf die Patenterteilung:
**21.12.2005 Patentblatt 2005/51**

(21) Anmeldenummer: **03757024.9**

(22) Anmeldetag: **05.06.2003**

(51) Int Cl.:
**B32B 27/18** (2006.01)   **F16C 33/20** (2006.01)
**C08K 3/00** (2006.01)

(86) Internationale Anmeldenummer:
**PCT/EP2003/005892**

(87) Internationale Veröffentlichungsnummer:
**WO 2003/103955 (18.12.2003 Gazette 2003/51)**

(54) **GLEITLAGERVERBUNDWERKSTOFF**

PLAIN BEARING COMPOSITE MATERIAL

MATERIAU COMPOSITE DE PALIER LISSE

(84) Benannte Vertragsstaaten:
**AT BE BG CH CY CZ DE DK EE ES FI FR GB GR HU IE IT LI LU MC NL PT RO SE SI SK TR**

(30) Priorität: **07.06.2002 DE 10226262**
**10.06.2002 DE 10225783**

(43) Veröffentlichungstag der Anmeldung:
**09.03.2005 Patentblatt 2005/10**

(73) Patentinhaber: **KS Gleitlager GmbH**
**68789 St. Leon-Rot (DE)**

(72) Erfinder:
- **HAUPERT, Frank**
  **67705 Stelzenberg (DE)**
- **BICKLE, Wolfgang**
  **68799 Reilingen (DE)**

(74) Vertreter: **Friz, Oliver**
**Dreiss Patentanwälte**
**Postfach 10 37 62**
**70032 Stuttgart (DE)**

(56) Entgegenhaltungen:
**DE-A- 3 601 569    US-A- 5 643 683**

**Beschreibung**

Die Erfindung betrifft einen Gleitlagerverbundwerkstoff mit einer metallischen Stützschicht, gegebenenfalls mit einer darauf aufgebrachten porösen Trägerschicht, und mit einer eine Gleitfläche für einen Gleitpartner bildenden bleifreien Gleitschicht mit einem Gleitschichtmaterial auf Kunststoffbasis mit PEEK und mit einem Schmierstoff in Form von Zinksulfid.

Ein solcher Gleitlagerverbundwerkstoff ist bekannt aus DE 36 01 569 A1, wo PEEK als einer von mehreren Polymeren genannt ist, obschon keines der Ausführungsbeispiele PEEK umfasst. Die Druckschrift lehrt, zur Erhöhung der Verschleißfestigkeit 5- 40 Vol.-% Zinksulfid und/oder Bariumsulfat in dem Gleitschichtmaterial zu verwenden. Als die Festigkeit erhöhende Zusätze sind Glasfasern, Glasperlen, Kohlefasern, Keramikfasern und Aramidfasern genannt. Die Ausführungsbeispiele umfassen sämtlich Glasfasern oder Glasperlen.

DE 37 36 292 A1 offenbart eine separat herstellbare Gleitschicht auf Folienbasis, die dann über eine als Haftvermittler dienende Zwischenschicht oder direkt auf eine metallische Stützschicht aufbringbar ist. Als Material für die Gleitschicht ist fluorierter Kunststoff, insbesondere PTFE oder modifiziertes PTFE oder Polyimid oder PEEK als geeignet genannt. Keines der Ausführungsbeispiele umfasst PEEK. Der Gleitschicht kann gemäß dieser Druckschrift zur Verstärkung und/oder zur Verbesserung der Wärmeleitfähigkeit und/oder der Verschleißeigenschaften ein oder mehrere Füllstoffe zugegeben werden. Je nach Zielsetzung seien insbesondere Kohle, Aluminiumoxid, Keramikwerkstoffe, Glas, Bronze, Molybdändisulfid oder Siliziumcarbid eingelagert.

Gleitlager aus Gleitlagerverbundwerkstoffen mit einer Gleitschicht auf Kunststoffbasis haben in der Technik eine weite Verbreitung gefunden, und zwar für weitestreichende Anforderungsbereiche, etwa im Hinblick auf die Belastbarkeit, Chemikalienbeständigkeit oder die Temperaturbeständigkeit. Es sind Thermoplaste bekannt und erhältlich, bei denen jedoch die Temperaturbeständigkeit nur für Betriebstemperaturen bis ca. 90° C gewährleistet werden kann; es sind dies beispielsweise ABS, Hochdruck-Polyethylen (HD-PE), PVC, Polysulfon (PS) und andere. Es existiert aber auch eine Anzahl von sogenannten technischen Thermoplasten, die sich für Einsatztemperaturen bis ca. 150° C eignen, wie z. B. POM, PET, PA.

Die vorliegende Erfindung betrifft solche Gleitlagerverbundwerkstoffe, die sich für den Einsatz bei Dauergebrauchstemperaturen von oberhalb 180° C eignen sollen. Sie sollen dabei aber auch sehr gute tribologische Eigenschaften und günstige mechanische Kennwerte im Hinblick auf Umformbarkeit sowie eine hohe Chemikalienbeständigkeit aufweisen. Zudem wird an den Gleitlagerverbundwerkstoff die Forderung gestellt, dass er sich in einem industriell durchführbaren Herstellungsverfahren produzieren lässt.

Diese Aufgabe wird durch einen Gleitlagerverbundwerkstoff mit den Merkmalen des Anspruchs 1 gelöst.

Es wurde mit der Erfindung festgestellt, dass der Teilchengröße des Schmierstoffs in Form von Zinksulfid und der härtenden Komponente in Form von Titandioxid, welche der matrixbildenden Kunststoffkomponente zugesetzt sind, eine wichtige Bedeutung zukommt. Unter Verwendung von feinen Teilchen im beanspruchten Bereich lässt sich eine "dichte" homogene Verteilung dieser Stoffe in der Kunststoffmatrix erreichen. Es wurde festgestellt, dass sich auf diese Weise eine Steigerung der Leistungsfähigkeit des Gleitlagerverbundwerkstoffs sowohl im Hinblick auf geringe Verschleißraten als auch im Hinblick auf einen günstigen Reibkoeffizienten erreichen lässt. Die erwähnte härtende Komponente und der Schmierstoff des Gleitschichtmaterials liegen vorzugsweise in Form feiner Teilchen mit einem D50-Wert der Teilchengröße von höchstens 400 nm, vorzugsweise von 100 - 350 nm vor. Der vorerwähnte D50-Wert der Teilchengröße bezeichnet eine Teilchengröße, bezüglich der 50 Gew.% des betreffenden Stoffs mit einer demgegenüber größeren Teilchengröße und 50 Gew.% mit einer demgegenüber kleineren Teilchengröße vorliegen. Da es sich bei den zuzusetzenden Schmierstoffpartikeln und bei den Partikeln der härtenden Komponente in Form von Titandioxid um in technischen Verfahren herzustellende bzw. nach technischen Verfahren sortierte pulverförmige Partikel handelt, wird üblicherweise eine glockenförmige oder annähernd Normalverteilungsform aufweisende Teilchengrößenverteilungskurve resultieren. Der D50-Wert der Teilchengröße wird dann in der Nähe des Maximums der glockenförmigen Verteilungskurve liegen. Es erweist sich im Sinne der vorliegenden Erfindung als vorteilhaft, wenn die glockenförmige Verteilungskurve derart ist, dass sich wenigstens 60%, insbesondere wenigstens 70% und vorzugsweise wenigstens 80 Gew.% des betreffenden Stoffs mit einer Teilchengröße innerhalb eines Teilchengrößenbereichs um das Glockenmaximum herum oder um den D50-Wert herum von $\pm$ 50% dieses Werts vorliegen, also beispielsweise bei einem D50-Wert von 330 nm in einem Teilchengrößenbereich von 330nm $\pm$165 nm, also von 165 nm bis 495 nm.

Es hat sich des Weiteren als zweckmäßig erwiesen, wenn eine Teilchengrößenverteilung derart ist, dass der Summenrückstand in Gewichtsprozent bei einer Siebanalyse mit variierender Maschenweite t, insbesondere zwischen 1 $\mu$m und 100 nm, durch folgende Beziehung beschrieben werden kann:

$$S = 100 \cdot e^{-\left(\frac{t}{d}\right)^{\beta}}$$

wobei in besonders vorteilhafter Weise die charakteristische Korngröße d zwischen 0,34 und 0,54 $\mu$m und der Formparameter $\beta$ der Verteilung zwischen 2,4 und 3,4 beträgt. Eine bevorzugte Verteilung ist gekennzeichnet durch eine charakteristische Korngröße von 0,440 $\mu$m (440 nm) und einem Formparameter $\beta$ von 2,87.

Durch den Zusatz von Kohlenstofffasern wird die Gleitschicht des Gleitlagerverbundwerkstoffs verstärkt, indem ihre Steifigkeit und Festigkeit, aber auch ihre Kriechfestigkeit erhöht wird. Ferner wird der Verschleißwiderstand durch Kohlenstofffasern erhöht. Besondere Bedeutung kommt auch dem Aspekt der Wärmeleitfähigkeit zu, der durch Kohlenstofffasern in der Gleitschicht verbessert wird. Diese führen dazu, dass eine Überhitzung der Gleitschicht verhindert wird, indem die beim Betrieb unmittelbar an der Oberfläche der Gleitschicht auftretende Reibungswärme an das Innere des Gleitlagerverbundwerkstoffs, insbesondere an die metallische Komponente einer gegebenenfalls vorgesehenen porösen Trägerschicht oder direkt an die metallische Stützschicht abgeführt wird.

Der Gleitlagerverbundwerkstoff mit Polyetheretherketon (PEEK) als matrixbildender Kunststoffkomponente erweist sich in Verbindung mit den weiteren beanspruchten Komponenten als hochtemperaturstabil, d. h. er kann bei Temperaturen oberhalb von 180° C, beispielsweise 190 bis 250° C dauerhaft eingesetzt werden. Zwar würde sich Polyphenylensulfon (PPS) als matrixbildende Kunststoffkomponente eines Gleitschichtmaterials aufgrund seiner Temperaturstabilität bis 260° C zumindest grundsätzlich eignen; PPS bildet jedoch eine im Hinblick auf ihr Haltevermögen ungenügende Matrix, die gerade beim Umformen zum Aufplatzen neigt und auch im Hinblick auf ihre tribologische Leistungsfähigkeit an diejenige von PEEK nicht anzuschließen vermag.

Die vorliegende Erfindung schließt zwar nicht aus, dass neben PEEK als matrixbildender Kunststoffkomponente noch ein oder mehrere weitere Thermoplaste in dem Gleitschichtmaterial enthalten sein dürfen. Ihr Anteil sollte aber nicht mehr als 20 Gew.-%, insbesondere nicht mehr als 10 Gew.-% des Anteils der Kunststoffkomponente in dem Gleitschichtmaterial betragen. Vorzugsweise ist die Kunststoffkomponente zu 100 % von PEEK gebildet.

Es wurde ferner festgestellt, dass bei dem erfindungsgemäßen Gleitlagerverbundwerkstoff gerade für dessen Einsatz unter Extremlastbedingungen auf den Zusatz von PTFE, das in üblichen Gleitwerkstoffen zwischen 2 und 15 Gew.-% vorhanden ist, verzichtet werden kann. Es wird davon ausgegangen, dass der an sich erwünschte Einfluss von PTFE auf die tribologischen Eigenschaften einer Werkstoffzusammensetzung von der beanspruchten Komponente Zinksulfid erbracht wird.

Es hat sich nach einer bevorzugten Ausführungsform der Erfindung als besonders vorteilhaft erwiesen, wenn es sich bei den Kohlenstofffasern um Kurzfasern einer Länge von 50 bis 250 $\mu$m, insbesondere von 60 bis 150 $\mu$m handelt. Es wurde nämlich erfindungsgemäß festgestellt, dass solchenfalls eine homogene Verteilung der Kohlenstofffasern im Gleitschichtmaterial auch innerhalb der Poren der gegebenenfalls vorgesehenen porösen Trägerschicht erreicht wird, bei der es sich beispielsweise um eine Bronzeschicht, insbesondere eine Blei-Zinn-Bronzeschicht handeln kann. Hierdurch kann die Wärmeleitfähigkeit weiter verbessert werden, indem die entstehende Wärme an die poröse Trägerschicht effektiv abgeleitet werden kann. Es haben sich hierbei Kohlenstofffasern mit einer Dicke von 8 bis 15 $\mu$m als vorteilhaft erwiesen.

Der gewichtsprozentuale Anteil der Kohlenstofffasern wiederum bezogen auf die Masse des Gleitschichtmaterials beträgt 5 - 15 Gew.-%.

Es hat sich des weiteren als vorteilhaft erwiesen, wenn das Gleitschichtmaterial Zusätze von Graphitpartikeln in einem gewichtsprozentualen Anteil bezogen auf die Masse des Gleitschichtmaterials von 5 bis 15 Gew.-% aufweist. Die Graphitpartikel sollten vorzugsweise als feine Partikel einer Teilchengröße bis maximal 15 $\mu$m, insbesondere 1 - 15 $\mu$m, vorzugsweise 1 - 5 $\mu$m vorliegen.

Es wurde des weiteren festgestellt, dass das erfindungsgemäße Gleitschichtmaterial hervorragend auf einer metallischen Stützschicht haftet und demgemäß auf eine poröse Trägerschicht auch verzichtet werden kann.

Der Gleitlagerverbundwerkstoff kann durch das folgende Verfahren hergestellt werden.

- Zuführen eines die Trägerschicht bildenden Bandmaterials und Vorerwärmen des Bandmaterials,

- Bilden eines bandförmigen Gleitschichtmaterials aus dem zuvor gemischten und erschmolzenen Gleitschichtmaterial durch Extrudieren der Schmelze,

- Zuführen des bandförmigen Gleitschichtmaterials auf das die Trägerschicht bildende Bandmaterial und Zusammenfügen unter Druck und bei Temperaturen von 300 bis 500 C°.

Durch das Extrudieren des Kunststoffgleitmaterials in eine dünne Bandform, das Aufbringen des Bands auf das erhitzte Trägerband ergeben sich wesentliche Vorteile, und zwar hat es sich gezeigt, dass das Kunststoffgleitmaterial auf diese Weise ohne vorheriges Zermahlen zu erfordern in die Poren der porösen Trägerschicht eingebracht werden kann.

Weitere Merkmale, Einzelheiten und Vorteile der Erfindung ergeben sich aus den Patentansprüchen und der zeichnerischen Darstellung und nachfolgenden Beschreibung von Werkstoffzusammensetzungen und deren Eigenschaften. In der Zeichnung zeigt:

Figur 1                eine schematische Darstellung verschiedener Prüfverfahren bzw. Prüfstände;

Figuren 2 bis 4        die graphische Darstellung der Messung spezifischer Verschleißraten bei verschiedenen Versuchsbedingungen unter Anwendung der Prüfverfahren nach Figur 1 und

Figuren 5 bis 7        eine graphische Darstellung der Messung des Reibkoeffizienten bei verschiedenen Werkstoffen und verschiedenen Prüfbedingungen.

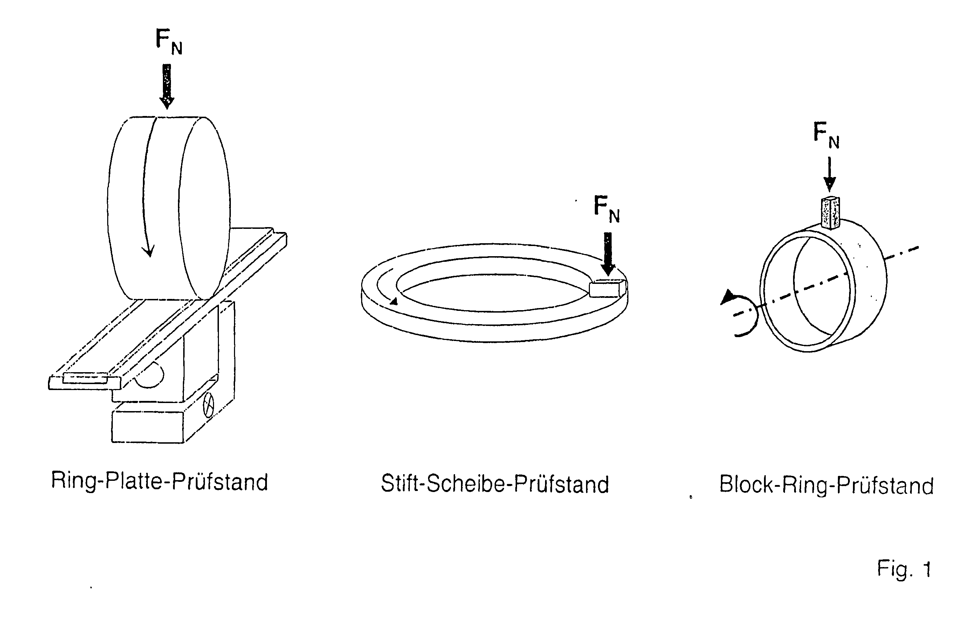

Die nachfolgend gewonnenen Prüfergebnisse wurden durch verschiedene, an sich bekannte Prüfverfahren gewonnen. Es wurden die in Figur 1 skizzierten Untersuchungen auf einem sogenannten Ring-Platte-Prüfstand (Figur 1 links), auf einem Stift-Scheibe-Prüfstand (Figur 1 Mitte) und auf einem Block-auf-Ring-Prüfstand (Figur 1 rechts) ausgeführt.

Es wurde ein Vergleichswerkstoff mit der Bezeichnung P23 untersucht, bei dem das Gleitschichtmaterial als matrixbildende Kunststoffkomponente PVDF sowie als Schmierstoff Blei und PTFE enthält. Ferner wurde untersucht ein Gleitlagerverbundwerkstoff mit einer Gleitschicht aus einem im Handel erhältlichen Gleitschichtmaterial mit PEEK als matrixbildender Kunststoffkomponente und der Zusammensetzung, die aus der nachfolgenden Tabelle unter der Bezeichnung PEEK 4 ersichtlich ist. Die Kohlenstofffasern des Werkstoffs PEEK 4 haben eine Länge von 1000 $\mu$m - 5000$\mu$m.

| Bezeichnung | Matrix | ZnS Gew.-% | C-Fasern Gew.-% | PTFE Gew.-% | Graphit Gew.-% | TiO$_2$ Gew.-% |
|---|---|---|---|---|---|---|
| PEEK 4 | Rest PEEK | - | 10 | 10 | 10 | - |
| PEEK 5 | Rest PEEK | 10 | 10 | 10 | - | - |
| PEEK 6 | Rest PEEK | 10 | 10 | - | 10 | 10 |
| PEEK 7 | Rest PEEK | 10 | - | - | 10 | 5 |

Sodann wurden Verbundwerkstoffe mit den Bezeichnungen PEEK 5, 6, 7 mit Zusammensetzungen des Gleitschichtmaterials, die ebenfalls aus der nachfolgenden Tabelle ersichtlich sind, getestet. Bei sämtlichen Werkstoffen wurde das Gleitschichtmaterial in eine poröse Trägerschicht eingebracht, die auf eine Stützschicht aus Stahl aufgesintert ist.

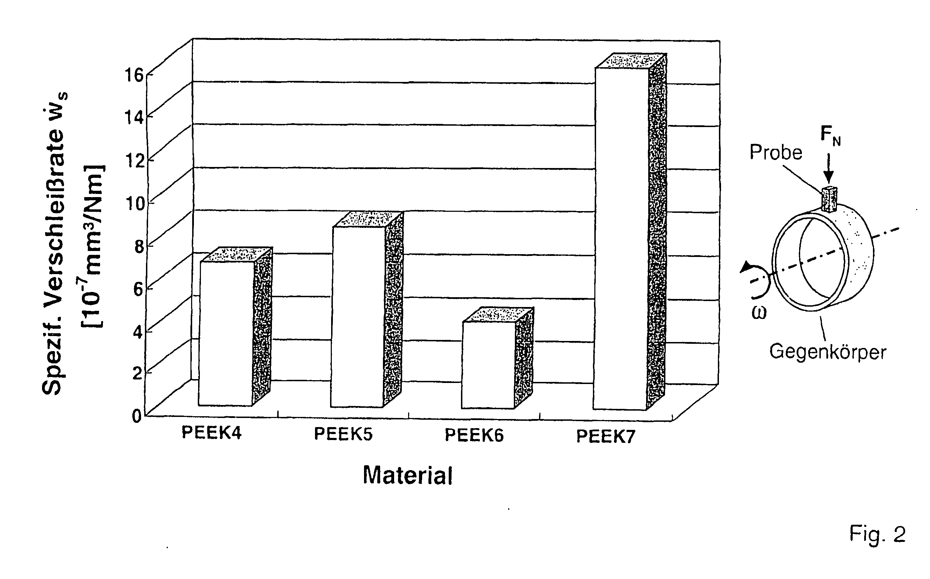

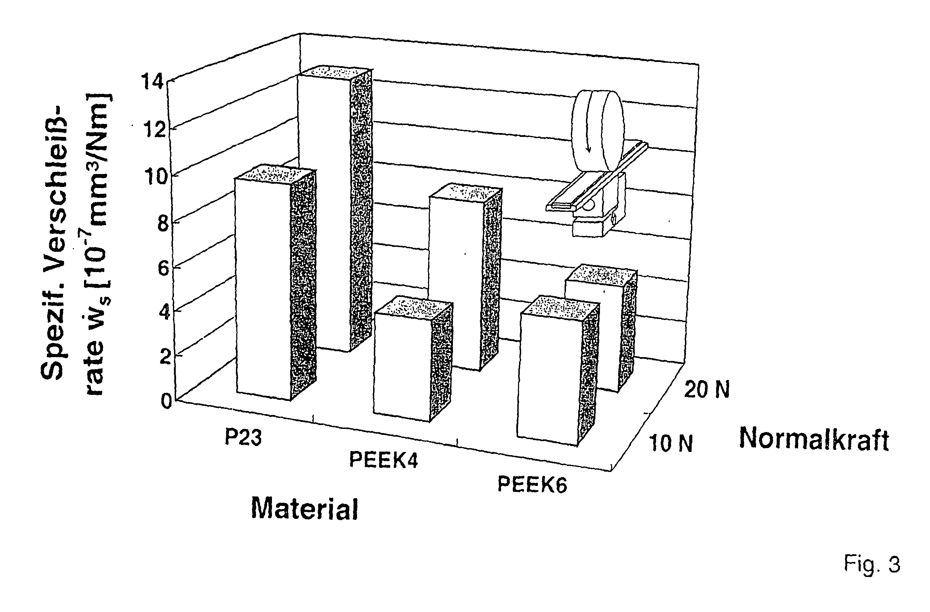

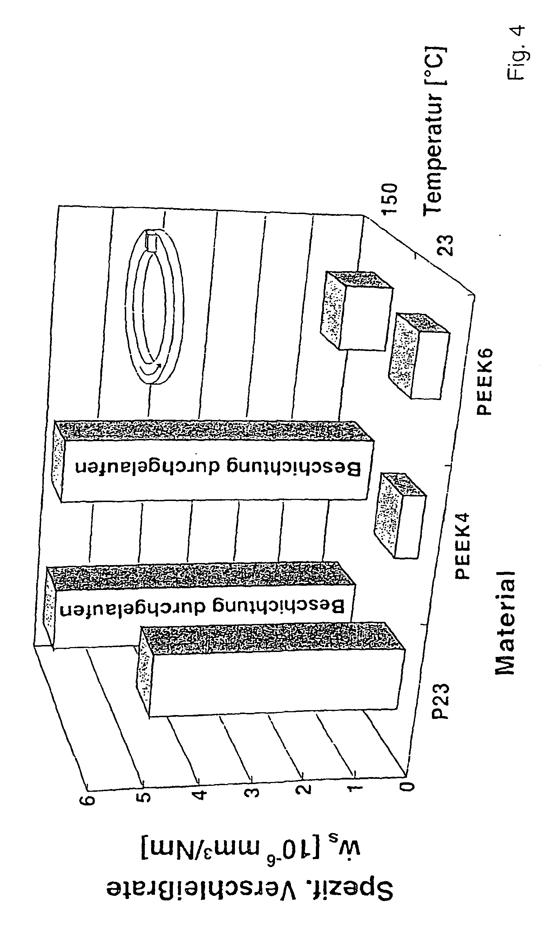

Die Figuren 2, 3 und 4 zeigen die Prüfergebnisse zur spezifischen Verschleißrate, die einmal auf einem Block-auf-Ring-Prüfstand gewonnen wurden (Figur 2, dort bildet das Gleitschichtmaterial den "Block", es liegt aber in "bulk"-Form, also nicht auf einer porösen Trägerschicht vor), sowie auf einem Ring-Platte-Prüfstand (Figur 3) bzw. einem Stift-Scheibe-Prüfstand (Figur 4). Bei der Prüfung nach Figur 2 wurde mit folgenden Parametern gearbeitet:

| | |
|---|---|
| Versuchsdauer: | 20 h |
| Flächenpressung: | 1 MPa |
| Gleitgeschwindigkeit: | 1,0 m/s |
| Gegenkörper: | 100Cr6, $R_a$ = 0,1-0,2 $\mu$m |
| Schmierung: | ungeschmiert |
| Raumtemperatur | |

Bei der Prüfung nach Figur 3 wurde mit folgenden Parametern gearbeitet:

| | |
|---|---|
| Versuchsdauer: | 20 h |

(fortgesetzt)

| Gleitgeschwindigkeit: | 1,57 m/s |
|---|---|
| Gegenkörper: | 100Cr6, $R_a$ = 0,1-0,2 $\mu$m |
| Schmierung: | ungeschmiert |
| Raumtemperatur | |

Es sind Messwerte bei jeweils zwei verschiedenen Andruckkräften des Rings gegen die Platte von 10 N und 20 N gemessen.

Bei der Prüfung nach Figur 4 wurde mit folgenden Parametern gearbeitet:

| Versuchsdauer | 20 h |
|---|---|
| Flächenpressung | 0,5 MPa |
| Gleitgeschwindigkeit | 1,57 m/s |
| Gegenkörper | 100Cr6, $R_a$ = 0,1-0,2 $\mu$m |
| Schmierung | ungeschmiert |

Es wurde bei zwei verschiedenen Temperaturen, nämlich Raumtemperatur von 23° C und 150° C gemessen. Die Messungen zeigen, dass bei der Prüfung nach Figur 2 der erfindungsgemäße Gleitlagerverbundwerkstoff PEEK 6 gegenüber den Vergleichswerkstoffen eine geringere spezifische Verschleißrate, also einen höheren Verschleißwiderstand aufweist. Bei der Prüfung nach Figur 3 wurde festgestellt, dass der erfindungsgemäße Gleitlagerverbundwerkstoff PEEK 6 sich gerade bei hohen Flächenpressungen, also hohen Belastungen als den anderen Werkstoffen überlegen darstellt. Insbesondere wird deutlich, dass die Weglassung der Kohlenstofffasern und die Reduzierung von $TiO_2$ bei PEEK 7 im Vergleich zu PEEK 6 sich negativ auf den Verschleißwiderstand auswirkt, also die Verschleißrate erhöht. Hingegen bewirkt die Zugabe von $TiO_2$ bei PEEK 6 ausgehend von PEEK 5, welches kein $TiO_2$ aufweist, eine Verringerung der Verschleißrate.

Bei der Prüfung nach Figur 4 wurde eine überlegene Temperaturbeständigkeit des erfindungsgemäßen Werkstoffs PEEK 6 ermittelt. Während die anderen beiden Vergleichswerkstoffe den Anforderungen nicht gewachsen waren und ausfielen, da ihre Gleitschicht und eine auf die Stützschicht aufgebrachte poröse Trägerschicht vollständig bis auf die aus Stahl bestehende Stützschicht abgerieben wurde.

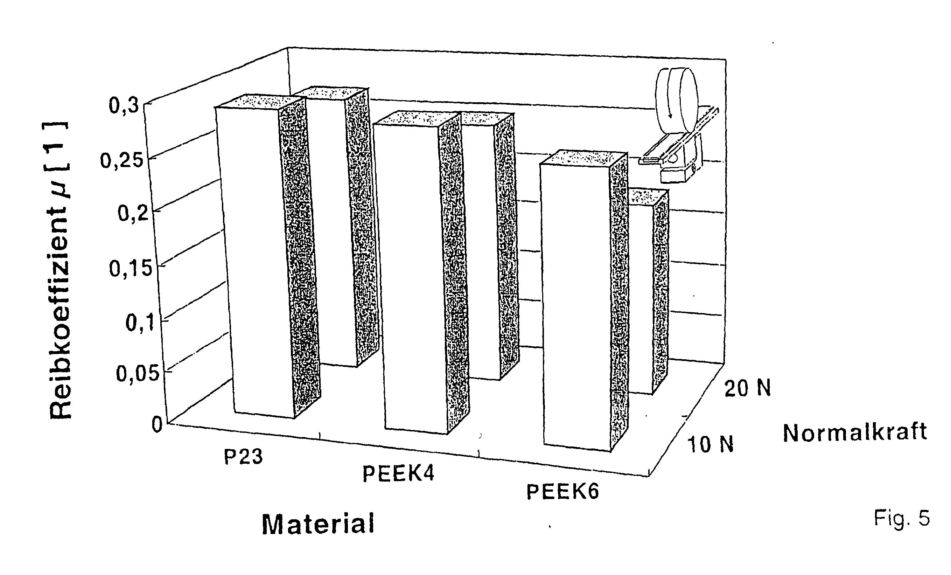

Die Figuren 5 bis 7 zeigen Prüfungen des Reibkoeffizienten der vorstehend erörterten Vergleichswerkstoffe P 23, PEEK 4 und des erfindungsgemäßen Werkstoffs PEEK 6.

Die Prüfparameter bei der Prüfung nach Figur 5 waren wie folgt:

| Versuchsdauer: | 20 h |
|---|---|
| Gleitgeschwindigkeit: | 1,57 m/s |
| Gegenkörper: | 100Cr6, $R_a$ = 0,1-0,2 $\mu$m |
| Schmierung: | ungeschmiert |
| Raumtemperatur | |

Es wurde bei dieser Prüfung auf einem Ring-Platte-Prüfstand der Reibkoeffizient der Werkstoffe bei zwei verschiedenen Anpressdrücken von 10 und 20 N gemessen.

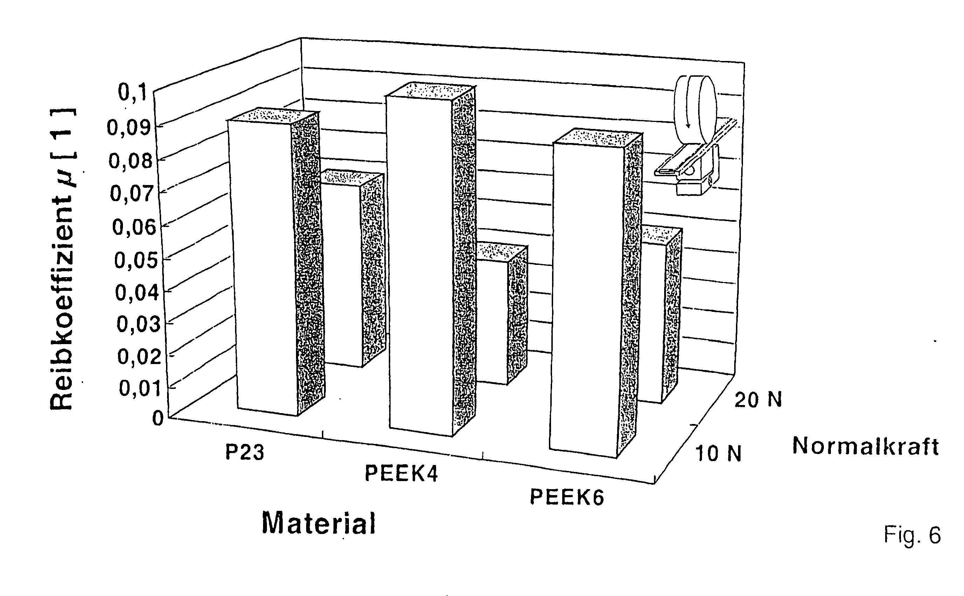

Die Prüfparameter bei der Prüfung nach Figur 6 auf einem Ring-Platte-Prüfstand waren wie folgt:

| Versuchsdauer: | 72 h |
|---|---|
| Gleitgeschwindigkeit: | 1,57 m/s |
| Gegenkörper: | 100Cr6, $R_a$ = 0,1-0,2 $\mu$m |
| Schmierung: | Initialschmierung |
| Raumtemperatur | |

Diese Prüfung des Reibkoeffizienten unterscheidet sich von derjenigen nach Figur 5 dadurch, dass eine Initialschmierung verwendet wurde, während die Prüfung nach Figur 5 ungeschmiert erfolgte. Die Versuchsdauer ist etwa drei mal so lang. Wiederum ergibt sich eine Überlegenheit des erfindungsgemäßen Werkstoffs bei dem höheren Anpressdruck.

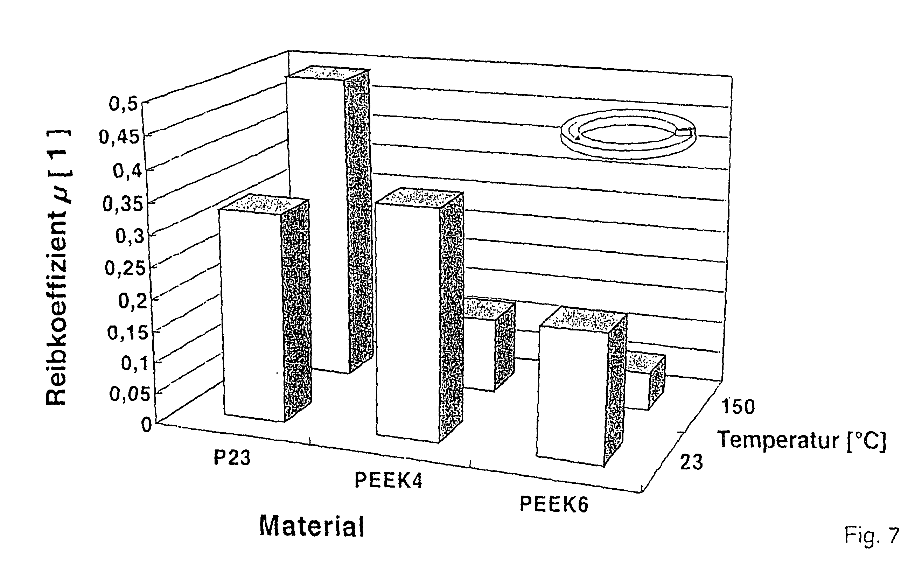

Die Prüfparameter bei der Prüfung nach Figur 7 waren wie folgt:

| Versuchsdauer | 20 h |
|---|---|
| Flächenpressung | 0,5 MPa |
| Gleitgeschwindigkeit | 1,57 m/s |
| Gegenkörper | 100Cr6, $R_a$ = 0, 1-0, 2 $\mu$m |
| Schmierung | ungeschmiert |

Bei der Prüfung des Reibkoeffizienten auf einem Stift-Scheibe-Prüfstand bei zwei Prüftemperaturen, nämlich Raumtemperatur von 23° C und einer erhöhten Temperatur von 150° C, zeigt sich die den Vergleichswerkstoffen überlegene Temperaturbeständigkeit des erfindungsgemäßen Werkstoffs PEEK 6.

Eine bevorzugte Zusammensetzung des erfindungsgemäßen Gleitlagerverbundwerkstoffs ist gegeben durch eine Stützschicht aus Stahl und eine darauf aufgebrachte poröse Trägerschicht aus Bronze, beispielsweise Kupfer-Zinn-Bronze, wie CuSn10, und eine Gleitschicht aus einem Gleitschichtmaterial einer Zusammensetzung gemäß dem Ausführungsbeispiel FEEK 6 mit 10 Gew.-% ZnS, 10 Gew.-% Kohlenstofffasern, 10 Gew.-% Graphitpartikeln und 10 Gew.-% $TiO_2$ Das Zinksulfid als Schmierstoff und das Titandioxid als härtender Stoff liegen bei den Werkstoffen PEEK 5, 6 und 7 in Form extrem feiner Partikel vor, wobei das Zinksulfid mit einer mittleren Partikelgröße mit einem D50-Wert von etwa 300 nm und das Titandioxid mit einer mittleren Partikelgröße mit einem D50-Wert von etwa 300 nm vorliegt. Hierdurch entstehen besonders feine homogene Strukturen und besonders geringe Reibwerte und Verschleißwerte. Die Kohlenstofffasern haben bei den Werkstoffen PEEK 5, 6 eine Länge von 50 bis 250 $\mu$m, vorzugsweise von 60 bis 150 $\mu$m, ihr mittlerer Durchmesser beträgt 8 bis 15 $\mu$m. Die Größe der Graphitpartikel liegt bei bis zu 15 $\mu$m, insbesondere bei 1 - 15 $\mu$m, vorzugsweise bei 1-5 $\mu$m. PEEK bildet dann den Rest des Kunststoffgleitlagermaterials. Umgerechnet auf eine volumenprozentuale Zusammensetzung ergibt sich, dass der volumenprozentuale Anteil der PEEK-Matrix vorzugsweise zwischen 55 und 90 Vol.-% liegt. Eine bevorzugte Zusammensetzung besteht aus 75 Vol.-% PEEK, 4 Vol.-% ZnS, 10 Vol.-% Kohlenstoffkurzfasern, 7 Vol.-% Graphit und 4 Vol.-% $TiO_2$.

**Patentansprüche**

1. Gleitlagerverbundwerkstoff mit einer metallischen Stützschicht, gegebenenfalls mit einer darauf aufgebrachten porösen Trägerschicht, und mit einer eine Gleitfläche für einen Gleitpartner bildenden bleifreien Gleitschicht mit einem Gleitschichtmaterial auf Kunststoffbasis mit PEEK und mit einem Schmierstoff in Form von Zinksulfid, **dadurch gekennzeichnet, dass** das Gleitschichtmaterial PEEK als matrixbildende Kunststoffkomponente und ferner den Schmierstoff in Form von Zinksulfid und eine härtende Komponente in Form von Titandioxid und zusätzlich Kohlenstofffasern aufweist und dass der gewichtsprozentuale Anteil des Schmierstoffs und der härtenden Komponente bezogen auf die Masse des Gleitschichtmaterials jeweils 5 - 15 Gew.-% beträgt und dass der Schmierstoff und die härtende Komponente in Form feiner Teilchen mit einem D50-Wert der Teilchengröße von höchstens 500 nm vorliegt, and dass der gewichtsprozentuale Anteil der Kohlenstofffasern bezogen auf die Masse des Gleitschichtmaterials 5 - 15 Gew.-% beträgt.

2. Gleitlagerverbundwerkstoff nach Anspruch 1, **dadurch gekennzeichnet, dass** der Schmierstoff und die härtende Komponente in Form feiner Teilchen mit einem D50-Wert der Teilchengröße von höchstens 400 nm, insbesondere von 100 - 350 nm vorliegt.

3. Gleitlagerverbundwerkstoff nach Anspruch 1 oder 2, **dadurch gekennzeichnet, dass** die Kohlenstofffasern eine Länge von 50 - 250 $\mu$m, insbesondere 60 - 150 $\mu$m aufweisen.

4. Gleitlagerverbundwerkstoff nach Anspruch 1, 2 oder 3, **dadurch gekennzeichnet, dass** die Kohlenstofffasern eine Dicke von 8 - 15 $\mu$m aufweisen.

5. Gleitlagerverbundwerkstoff nach einem der vorstehenden Ansprüche, **dadurch gekennzeichnet, dass** das Gleitschichtmaterial Zusätze von Graphitpartikeln in einem gewichtsprozentualen Anteil bezogen auf die Masse des Gleitschichtmaterials von 5 - 15 Gew.-% aufweist.

**Claims**

1.  Slide bearing composite material with a metallic support layer, optionally with a porous carrier layer applied thereto, and with a lead-free sliding layer, which forms a sliding surface for a sliding partner and the sliding layer material of which is based on plastics material comprising PEEK, and with a lubricant in the form of zinc sulphide, **characterised in that** the sliding layer material comprises PEEK as a matrix-forming plastics material component, the lubricant in the form of zinc sulphide, and a curing component in the form of titanium dioxide, and also carbon fibres, **in that** the weight percentage content of the lubricant and the curing component based on the mass of the sliding layer material is, in each case, 5 to 15 % by weight, and **in that** the lubricant and the curing component are in the form of fine particles having a particle size D50 value of no more than 500 nm, and that the weight percentage content of the carbon fibres based on the mass of the sliding layer material is 5 to 15 % by weight.

2.  Slide bearing composite material according to claim 1, **characterised in that** the lubricant and the curing component are in the form of fine particles having a particle size D50 value of no more than 400 nm, in particular from 100 to 350 nm.

3.  Slide bearing composite material according to either claim 1 or claim 2, **characterised in that** the carbon fibres are between 50 and 250 $\mu$m, in particular 60 and 150 $\mu$m, long.

4.  Slide bearing composite material according to claim 1, claim 2 or claim 3, **characterised in that** the carbon fibres are between 8 and 15 $\mu$m thick.

5.  Slide bearing composite material according to any one of the preceding claims, **characterised in that** the sliding layer material comprises graphite particle additives at a weight percentage content, based on the mass of the sliding layer material, of 5 to 15 % by weight.

**Revendications**

1.  Matériau composite de palier lisse composé d'une couche d'appui métallique, sur laquelle est éventuellement rapportée une couche support poreuse, et d'une couche de glissement sans plomb formant une surface de glissement pour un élément glissant antagoniste, le matériau de la couche de glissement étant à base de plastique avec du PEEK et avec un lubrifiant sous la forme de sulfure de zinc, **caractérisé en ce que** le matériau de la couche de glissement comporte du PEEK comme composant plastique constitutif de la matrice ainsi que le lubrifiant sous la forme de sulfure de zinc et un composant durcissant sous la forme d'oxyde de titane de même que des fibres de carbone, **en ce que** le pourcentage pondéral de lubrifiant et de composant durcissant rapporté à la masse du matériau de la couche de glissement est respectivement de 5 à 15 % en poids et **en ce que** le lubrifiant et le composant durcissant sont présents sous la forme de fines particules de diamètre médian D50 inférieur ou égal à 500 nm, et **en ce que** le pourcentage pondéral de fibres de carbone rapporté à la masse du matériau de la couche de glissement est compris entre 5 et 15 %.

2.  Matériau composite de palier lisse selon la revendication 1, **caractérisé en ce que** le lubrifiant et le composant durcissant sont présents sous forme de fines particules de diamètre médian D50 inférieur ou égal à 400 nm, de préférence compris entre 100 et 350 nm.

3.  Matériau composite de palier lisse selon l'une des revendications 1 ou 2, **caractérisé en ce que** les fibres de carbone ont une longueur de 50 à 250 $\mu$m, notamment de 60 à 150 $\mu$m.

4.  Matériau composite de palier lisse selon la revendication 1, 2 ou 3, **caractérisé en ce que** les fibres de carbone ont une épaisseur de 8 à 15 $\mu$m.

5.  Matériau composite de palier lisse selon l'une quelconque des revendications précédentes, **caractérisé en ce que** le matériau de la couche de glissement contient des éléments d'addition sous la forme de particules de graphite selon un pourcentage pondéral de 5 à 15 % de la masse de matériau de la couche de glissement.

$F_N$

$F_N$

$F_N$

Ring-Platte-Prüfstand

Stift-Scheibe-Prüfstand

Block-Ring-Prüfstand

Fig. 1

EP 1 511 625 B2

Fig. 2

EP 1 511 625 B2

Fig. 3

EP 1 511 625 B2

Fig. 4

Fig. 5

EP 1 511 625 B2

Fig. 6

EP 1 511 625 B2

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3601569 A1

- DE 3736292 A1